(19) Europäisches Patentamt
European Patent Office
Office européen des brevets

(11) Numéro de publication: **0 146 422**
**A1**

# (12) DEMANDE DE BREVET EUROPEEN

(21) Numéro de dépôt: **84402054.5**

(22) Date de dépôt: **12.10.84**

(51) Int. Cl.⁴: **C 08 L 83/04**
// C08K5/07 ,(C08L83/04, 83:07)

(30) Priorité: **26.10.83 FR 8317053**

(43) Date de publication de la demande: **26.06.85 Bulletin 85/26**

(84) Etats contractants désignés: **AT BE CH DE FR GB IT LI LU NL SE**

(71) Demandeur: **RHONE-POULENC SPECIALITES CHIMIQUES, "Les Miroirs" 18, Avenue d'Alsace, F-92400 Courbevoie (FR)**

(72) Inventeur: **Cavezzan, Jacques, Parc Tête d'Or 4, allée Marcel Achard, F-69100 Villeurbanne (FR)**

(74) Mandataire: **Seugnet, Jean Louis et al, RHONE-POULENC RECHERCHES Service Brevets Chimie et Polymères 25, quai Paul Doumer, F-92408 Courbevoie (FR)**

## (54) Agent inhibiteur cétonique pour catalyseur d'un métal du groupe du platine et compositions organopolysiloxaniques le contenant.

(57) La présente invention concerne une composition organopolysiloxanique comportant un organopolysiloxane ayant au moins un radical vinyle, un organohydropolysiloxane, un catalyseur complexe d'un métal du groupe du platine et au moins un inhibiteur qui est un composé organique ayant un point d'ébullition d'au moins 25°C et présentant au moins un groupe acétylénique ayant un groupement carbonyle en position α par rapport aux carbones à insaturation acétylénique.

Les compositions selon l'invention sont utilisables pour rendre un matériau non adhérent à d'autres matériaux auxquels il adhérerait normalement.

EP 0 146 422 A1

# AGENT INHIBITEUR CETONIQUE POUR CATALYSEUR D'UN METAL DU GROUPE DU PLATINE ET COMPOSITIONS ORGANOPOLYSILOXANIQUES LE CONTENANT

La présente invention concerne un agent inhibiteur cétonique pour catalyseur d'un métal du groupe du platine et les compositions de siloxane le contenant. Plus précisément, l'invention concerne une composition organopolysiloxanique qui soit stable durant un certain temps à température ambiante, cette durée étant adaptée en fonction du domaine d'utilisation de la composition, et qui durcisse sous l'effet d'un traitement approprié (traitement thermique, traitement aux rayons U.V., infra-rouge, à un rayonnement ionisant, etc...). Ce durcissement est effectué par les réactions bien connues de groupements ≡ SiH avec des radicaux d'oléfines non saturées liés au silicium catalysées par un métal du groupe du platine.

De telles compositions sont en général conservées avant emploi sous forme de compositions bicomposantes ou à 2 emballages, les 2 composants sont mélangés juste avant leur utilisation sous forme de composition unique et le problème principal à résoudre consiste essentiellement à éviter une gelification prématurée de ces compositions. Il est donc nécessaire que ces compositions comportent un inhibiteur du catalyseur qui inhibe ou retarde l'activité catalytique à température ambiante mais dont l'action inhibitrice disparaisse lors du traitement de réticulation de la composition.

Un but de la présente invention est de proposer une composition organopolysiloxanique pouvant être stockée sous une forme bicomposante comportant des radicaux ≡ SiH Si-vinyle et un catalyseur du groupe du platine qui lors de la mise en oeuvre après mélange des 2 composantes ne présente pas une gélification intempestive durant un temps approprié et présentant donc une vie en pot ("pot life") ou une vie de bain "bath life" convenable grâce à un inhibiteur approprié du catalyseur qui est un complexe d'un métal du groupe du platine présent dans la composition prête à l'emploi.

Un autre but de la présente invention est de proposer une composition organopolysiloxanique du type ci-dessus et dont l'inhibiteur pour certaines applications retarde efficacement l'action catalytique de réticulation du complexe catalytique à des températures inférieures aux températures de réticulation de ces compositions mais dont l'action inhibitrice est insuffisante aux températures de réticulation.

Un autre but de la présente invention est de proposer une composition du type ci-dessus utilisable pour former des compositions réticulées sous forme de résines, d'élastomères, de gels ou de mousses conservées avant emploi, de préférence à l'abri de l'air sous forme de 2 composantes, une des 2 composantes comportant le catalyseur et réticulant en un élastomère après mélange des 2 composantes et chauffage à une température supérieure à 80° C, de préférence supérieure à 100° C, le mélange des 2 composantes présentant avant chauffage une vie en pot supérieure à plusieurs heures et pouvant aller très souvent jusqu'à plusieurs jours, voire plusieurs semaines. De telles compositions sont utilisables notamment pour l'enrobage de pièces métalliques ou l'isolation d'équipements électriques avec ou sans charges et réticulant en élastomères ayant les qualités requises de résistance mécanique et de flexibilité.

Un autre but de la présente invention est de proposer un nouvel inhibiteur du type ci-dessus qui soit non toxique et non lacrymogène.

Un autre but de la présente invention est de proposer des compositions d'enduction du type ci-dessus sans charge avec ou sans solvant pouvant rendre un matériau non adhérent tel que des feuilles métalliques, du verre des matières plastiques ou du papier à d'autres matériaux auxquels il adhérerait normalement et pouvant servir de composition conférant aux supports enduits, après réticulation de la composition de très bonnes propriétés antiadhérentes qui se conservent dans le temps, ces couches durcies résistant bien au frottement et, en particulier, n'étant pas enlevées par abrasion lors du passage de supports enduits sur les cylindres de renvoi des machines d'enduction ou d'adhésivation.

Dans ce qui suit les pourcentages et les parties sauf mention contraire sont exprimés en poids.

On a déjà proposé dans l'art antérieur de très nombreux inhibiteurs des catalyseurs du groupe du platine, ces inhibiteurs pouvant être utilisés seuls ou en combinaison et répondant partiellement aux buts visés par la présente invention.

On a ainsi notamment proposé des alkylthiourées (brevet US 3 188 299), des triallylisocyanurates (brevet US 3 882 083), des dialkylacétylènedicarboxylates (brevet US 4 347 346), des diallylmaléates (brevet US 4 256 870), un alkylvinylsiloxane linéraire ou cyclique comme décrit dans les brevets US 3 516 946 et 3 775 452 et dans le brevet français 1 548 775.

Dans le brevet US 3 445 420 on a proposé comme inhibiteur un composé organique acétylénique ayant un point d'ébullition d'au moins 25°C et au moins un groupement - C ≡ C -, ce composé organique étant exempt d'azote, de carboxyle, de phosphore, de groupement mercapto et de groupements carbonyle en position α par rapport à des atomes de carbone aliphatiquement non saturés.

Or on s'est aperçu de façon tout-à-fait inattendue, ce qui fait précisément l'objet de la présente invention, que les composés organiques acétyléniques présentant un groupement carbonyle en position α par rapport aux atomes de carbone à insaturation acétylénique et étant exempt d'atomes d'azote de phosphore et de groupements carboxyle et mercapto en position α par rapport aux atomes de carbone à insaturation acétylénique, présentent une action inhibitrice dans des compositions organopolysiloxaniques SiH Si-vinyle particulièrement appropriée qui répondent aux buts visés par la présente invention. La présente invention concerne en effet une composition organopolysiloxanique comprenant :

(1) au moins un organopolysiloxane comportant par molécule au moins un radical vinyle, les autres radicaux étant des radicaux organiques mono- ou divalents n'exerçant pas d'influence défavorable sur l'activité catalytique

(2) au moins un organohydropolysiloxane renfermant au moins 3 atomes d'hydrogène liés aux silicium par molécule, les autres radicaux étant des radicaux organiques mono- ou divalents, de préférence exempts d'insaturation aliphatique et n'exerçant pas d'influence défavorable sur l'activité catalytique

(3) un catalyseur qui est un complexe d'un métal du groupe du

platine en quantité suffisante pour faire réagir (1) et (2)

(4) au moins un agent inhibiteur choisi parmi un composé organique ayant un point d'ébullition d'au moins 25°C et au moins un groupement acétylénique présentant un groupement carbonyle en position α par rapport aux atomes de carbone à insaturation acétylénique, ledit composé (4) étant en quantité suffisante pour inhiber la formation prématurée d'un gel à température ambiante mais en quantité insuffisante pour empêcher la réticulation à température plus élevée.

Plus précisément le composé (1) peut présenter des unités structurelles moyennes de formule :

$$(R)_e\ (R')_f\ Si\ O\ \frac{4-e-f}{2} \qquad (I)$$

dans laquelle chaque R représente un radical choisi parmi un radical hydrocarboné monovalent ayant de 1 à 12 atomes de carbone, un radical hydrocarboné halogéné monovalent ayant de 1 à 12 atomes de carbone, un radical cyanoalkyle ayant de 3 à 4 atomes de carbone, un radical cycloalkyle ou halogénocycloalkyle ayant de 3 à 8 atomes de carbone et contenant de 1 à 4 atomes de chlore et/ou de fluor, un radical aryle, alkylaryle ou halogénoaryle ayant de 6 à 8 atomes de carbone et contenant de 1 à 4 atomes de chlore et/ou de fluor, R représente de préférence le radical méthyle et R' un radical alcényle choisi parmi un radical vinyle, allyle, méthallyle, butényle, pentényle, un radical alkynyle choisi parmi un radical éthynyle, propynyle, butynyle. De préférence R' représente le radical vinyle ou allyle et de façon encore plus préférée le radical vinyle, e et f ont la même signification que pour (II) ci-dessous.

Le composé (2) peut présenter des unités structurelles moyennes de formule :

$$(R)_e\ (H)_f\ SiO\ \frac{4-e-f}{2} \qquad (II)$$

dans laquelle R a la même signification que ci-dessus et e a une valeur comprise entre 0,5 et 2,49 et f a une valeur comprise entre 0,001 et 1 inclus et la somme de e plus f est comprise entre 1,0 et 2,5 inclus.

Les polymères de formule (I) sont bien connus et sont

décrits notamment dans les brevets US 3 220 972, 3 344 111 et 3 434 366.

Un copolymère typique a la formule (III) suivante :

$$H_2C = CH - \underset{R}{\overset{R}{Si}} - O \left[ \underset{R}{\overset{R}{Si}}O \right]_n \left[ \underset{R'}{\overset{R}{Si}}O \right]_m - \underset{R}{\overset{R}{Si}} - CH = CH_2 \quad (III)$$

dans laquelle R est de préférence un méthyle et R' un vinyle, la viscosité du polymère pouvant être comprise entre 40 et 100 000 m.Pa.s.à 25°C et n et m sont des nombres entiers choisis de telle sorte que la teneur pondérale en groupe vinyle ne dépasse pas 10 % en poids, de préférence 3 %, m pouvant être égal à 0.

Les organohydropolysiloxanes (2) englobent des produits fluides qui ne comportent pas de préférence de double liaison oléfinique mais qui comportent au moins 3 atomes d'hydrogène par molécule sous forme de groupement ≡Si-H. De tels composés (2) sont par exemple décrits dans les brevets US 3 220 972, 3 341 111 et 3 436 366.

L'organohydropolysiloxane (2) peut être de nature linéaire ou cyclique.

Un copolymère typique linéaire a la formule (IV) suivante:

$$CH_3 - \underset{CH_3}{\overset{CH_3}{Si}} - O \left[ \underset{CH_3}{\overset{CH_3}{Si}}\ O \right]_n \left[ \underset{H}{\overset{CH_3}{Si}}\ O \right]_m - \underset{CH_3}{\overset{CH_3}{Si}} - CH_3 \qquad (IV)$$

la viscosité du polymère pouvant être comprise entre 40 et 100 000 m.Pa.s. et n et m sont des nombres entiers choisis pour que la teneur en atomes d'hydrogène liés au silicium ne dépasse pas 1,67 % en poids et soit comprise de préférence entre 0,1 et 1,6 % en poids, n pouvant être égal à 0.

Le rapport des atomes d'hydrogène liés au silicium dans (2) à la somme des radicaux vinyle, alcényle et alkynyle liés au silicium dans (1) généralement est d'au moins 0,5 : 1.

La présente invention vise les compositions du type ci-dessus dont le mélange des 4 constituants conduit, après chauffage à une température supérieure à 80° C, de préférence supérieure à 100° C, à des compositions réticulées sous forme de résines, d'élastomères, de gels ou de mousses, ledit mélange ne présentant pas de gélification intempestive pendant plusieurs heures, généralement plusieurs jours et parfois plusieurs semaines.

Les agents inhibiteurs et les catalyseurs utilisables sont les mêmes que ceux décrits ci-après pour les compositions de revêtement. Si le rapport des atomes d'hydrogène liés au silicium dans (2) à la somme des radicaux vinyle, alcényle et alkynyle liés au silicium dans (1) est inférieur à 0,5, la réticulation est insuffisante. Ce rapport peut être supérieur à 2, si on souhaite faire des mousses d'élastomères.

Des charges et des additifs usuels peuvent être rajoutés de façon à diminuer le retrait lors de la réticulation, et à améliorer les propriétés mécaniques, la résistance aux intempéries, la tenue au feu, etc... On peut par exemple ajouter de la silice de combustion, de la silice de précipitation, des billes de verre, de l'alumine, de l'oxyde de fer, du noir de carbone, du carbonate de calcium, du carbonate de magnésium, des pigments, des antioxydants, etc... Si la composition contient des charges, en particulier de la silice, il est avantageux qu'elles soient traitées par par un silazane par exemple par l'hexaméthyldisilazane. La quantité d'inhibiteur peut être avantageusement comprise entre 0,01 et 3 %, de préférence entre 0,05 et 0,5 % par rapport au poids total de la composition.

Les compositions de l'invention présentent généralement une forte inhibition au durcissement quand elles sont utilisées telles quelles ou diluées dans un solvant. Quand elles sont dispersées ou diluées dans un solvant on utilise un solvant organique volatile compatible avec la composition, choisi par exemple parmi les alcanes, les coupes pétrolières renfermant des composés paraffiniques, le toluène, l'heptane, le xylène, l'isopropanol, la méthylisobutylcétone, le tétrahydrofuranne, le chlorobenzène, le chloroforme, le 1,1,1-trichloroéthane, les dérivés du monoéthylèneglycol et de méthylèneglycol.

De préférence le solvant forme de 50 à 99 % en poids de la dispersion.

Par évaporation du solvant de la dispersion, la composition durcit et ces dispersions sont donc utiles comme compositions de revêtement pour des objets en métal, bois, verre et des feuilles souples en papier, matière plastique etc..

Les compositions selon l'invention peuvent être également utilisées comme composition sans solvant utilisable pour rendre un matériau non adhérent, tel que des feuilles métalliques, du verre,

des matières plastiques ou du papier, à d'autres matériaux auxquels il adhérerait normalement et dans le cas d'une composition sans solvant la composition présente avantageusement une viscosité ne dépassant pas 5000 mPa.s. de préférence comprise entre 10 et 4000 mPa.s. à 25°C et le rapport des atomes d'hydrogène liés au silicium dans (2) à la somme des radicaux vinyle, alcényle et alkynyle liés au silicium dans (1) est d'au moins 0,5 : 1 et généralement inférieur à 2 : 1, ce rapport étant également applicable aux résines avec solvant.

L'invention vise donc également un procédé permettant de rendre des feuilles de matériau souple non adhérentes à des surfaces auxquelles elles adhèrent normalement, procédé caractérisé en ce qu'il consiste à appliquer une quantité de composition conforme à l'invention comprise généralement entre 0,1 et 5 g par $m^2$ de surface à enduire puis à réticuler la composition par tout moyen approprié.

Les temps de gélification de ces compositions diluées ou non à température ambiante peuvent être supérieurs à 20 heures et le catalyseur est réactivé à température plus élevée dépassant généralement 80°C.

Les compositions sans solvant, c'est-à-dire non diluées, sont appliquées à l'aide de dispositifs aptes à déposer, d'une façon uniforme, de faibles quantités de liquides. On peut utiliser à cet effet par exemple le dispositif nommé "Helio glissant" comportant en particulier 2 cylindres superposés : le rôle du cylindre placé le plus bas, plongeant dans le bac d'enduction où se trouvent les compositions, est d'imprégner en une couche très mince le cylindre placé le plus haut, le rôle de ce dernier est alors de déposer sur le papier les quantités désirées des compositions dont il est imprégné, un tel dosage est obtenu par réglage de la vitesse respective des deux cylindres qui tournent en sens inverse l'un de l'autre.

Les compositions diluées c'est-à-dire avec solvant peuvent être appliquées à l'aide des dispositifs utilisés sur les machines industrielles d'enduction du papier telles que le cylindre gravé "Mille points", le système nommé "Reverse Roll". Une fois déposées sur les supports les compositions sont durcies en quelques secondes par circulation dans des fours-tunnels chauffés vers

60-200°C, le temps de passage dans ces fours varie généralement de 2 à 30 secondes. Il est fonction, pour une longueur donnée des fours, de la vitesse à laquelle circulent les supports enduits (cette vitesse peut dépasser 200 mètres par minute) ; généralement un support constitué de matériaux cellulosiques circulent plus rapidement (par exemple à la vitesse de 3 m/seconde pour une température supérieure à 140°C) qu'un support à base de matière plastique. En effet ce dernier ne peut subir l'action de températures élevées il sera donc soumis à une température plus basse mais pendant une durée plus longue, par exemple il circulera à la vitesse de 0,75 m/seconde pour une température de l'ordre de 80°C.

Les quantités de compositions déposées sur les supports sont variables et s'échelonnent le plus souvent entre 0,1 et 5 $g/m^2$ de surface traitée. Ces quantités dépendent de la nature des supports et des propriétés antiadhérentes recherchées. Elles sont le plus souvent comprises entre 0,5 et 1,5 $g/m^2$ pour des supports non poreux.

Les compositions peuvent également contenir un composé cycloorganopolysiloxanique présentant des groupements vinyle et méthyle, de préférence sous forme d'un tétramère comme par exemple le tétraméthyl-1,3,5,7 tétravinyl-1,3,5,7 cyclotétrasiloxane.

Les compositions selon l'invention peuvent contenir en outre, pour 100 parties en poids de composés (1) et (2), de 1 à 20 parties en poids d'un polysiloxane linéaire jouant le rôle d'agent de couplage ou d'agent allongeur de chaîne et qui est un organosiloxane contenant deux atomes d'hydrogène liés au silicium par molécule, aucun atome de silicium n'ayant plus d'un atome d'hydrogène lié à lui et les 2 atomes d'hydrogène étant de préférence fixés sur les atomes de silicium terminaux du siloxane, les radicaux organiques de cet organosiloxane étant choisis parmi les radicaux méthyle, éthyle, phényle et trifluoro-3,3,3 propyle.

On peut utiliser comme catalyseur des complexes d'un métal du groupe de platine notamment les complexes de platine-oléfine comme décrit dans les brevets US 3 159 601 et 3 159 662, les produits de réaction des dérivés du platine avec des alcools des aldéhydes et des éthers décrits dans le brevet US 3 220 972, les catalyseurs platine-vinylsiloxane décrits dans les brevets français 1 313 846 et son addition 88 676 et le brevet français

1 480 409 ainsi que les complexes décrits dans les brevets US 3 715 334, 3 775 452 et 3 814 730, un catalyseur au rhodium tel que décrit dans les brevets US 3 296 291 et 3 928 629.

Les métaux préférés du groupe du platine sont le platine et le rhodium, le ruthénium bien que moins actif mais moins cher, est également utilisable.

Les inhibiteurs selon l'invention donnent des résultats particulièrement intéressants avec des complexes platine-vinylsiloxane en particulier le complexe de divinyl-1,3 tétraméthyl-1,1,3,3 disiloxane et des complexes platine-méthylvinylcyclotétrasiloxane en particulier le complexe platine tétraméthyl-1,3,5,7 tétravinyl-1,3,5,7 cyclotétrasiloxane.

La quantité de complexes de catalyseur et d'inhibiteur à ajouter est fonction notamment des compositions, du type de catalyseur et de l'application visée et, l'homme de métier n'aura aucune difficulté à déterminer cette quantité. De façon générale, pour des compositions de revêtement la teneur en catalyseur est comprise entre environ 5 et 1000 ppm de préférence entre 20 et 100 ppm (calculés en poids de métal précieux).

La quantité d'inhibiteur est généralement comprise entre 0,01 et 3,0 %, pour les compositions de revêtement sans solvant elle est de préférence comprise entre 0,05 et 2,0 % par rapport au poids total de la composition.

On a découvert, conformément à l'invention, que de très petites quantités d'inhibiteur permettent d'allonger de façon exceptionnelle la "vie en pot" (pot-life) dans des compositions sans solvant destinées au traitement de l'anti-adhérence papier sans pour cela affecter le temps de durcissement de la composition à chaud, ces compositions étant conservées à température ambiante ordinaire, c'est-à-dire inférieure à 40-45°C, de préférence inférieure à 25°C.

La réaction de réticulation qui a généralement lieu entre 60 et 130°C , de préférence entre 90 et 110°C, peut être initiée ou même totalement effectuée par des lampes infrarouges ou à l'aide d'un four à micro-ondes ou par rayonnement UV mais on peut utiliser dans tous les cas un four à air pulsé.

Dans le cadre de la présente invention, on peut utiliser n'importe quel inhibiteur (4) répondant à la définition générale

donnée ci-dessus, et en particulier des dérivés organosiliciques.

Les inhibiteurs selon l'invention peuvent répondre à la formule générale (A) :

$$R - (CH_2)_n - \overset{O}{\overset{\|}{C}} - C \equiv C - R' \qquad (A)$$

dans laquelle :

n est un nombre entier compris entre 0 et 10, de préférence entre 1 et 5,

R est choisi parmi un radical alkyle linéaire ou ramifié ayant de 1 à 10 atomes de carbone, alcényle ayant de 2 à 4 atomes de carbone, phényle, un radical cycloalkyle ayant de 4 à 8 atomes de carbone, un radical organosilyle choisi parmi les radicaux trialkylsilyle, trialkoxysilyle, la partie alkyle ayant de 1 à 4 atomes de carbone, ou un atome d'halogène choisi parmi le chlore, le brome et l'iode,

R' est choisi parmi l'atome d'hydrogène,un radical alkyle ayant de 1 à 4 atomes de carbone, un radical α-hydroxyalkyle ayant de 1 à 4 atomes de carbone, un radical alkylcarbonyle dont la partie alkyle comporte de 1 à 6 atomes de carbone, un radical benzoyle, un radical benzoylalkyle dont la partie alkyle comporte de 1 à 6 atomes de carbone, un radical organosilyle choisi parmi les radicaux trialkylsilyle, trialkoxysilyle, la partie alkyle ayant de 1 à 4 atomes de carbone.

Les inhibiteurs encore plus préférés selon l'invention sont ceux qui présentent une structure alcyne vraie et qui répondent à la formule (B) :

$$XCH_2 - (CH_2)_n \overset{O}{\overset{\|}{C}} - C \equiv CH \qquad (B)$$

dans laquelle n représente un nombre entier compris entre 1 et 15, de préférence entre 3 et 10 et X représente un atome d'halogène choisi parmi l'atome de chlore, de brome et d'iode.

Des dérivés répondant aux formules (A) et (B) sont généralement des produits connus dont la synthèse est par exemple décrite dans le brevet français n° 1 324 312, dans l'article de M. BARRELLE et R. GLENAT, Bulletin de la Société Chimique de France, 1967, n° 2, p. 453 et dans les articles de E.R. JONES, Journal of Chemical Society, p. 39 (1946) et BIRKOFER, Chem. Ber. volume 96, p. 3280 (1963). Dans le cas où les produits répondant aux formules (A) et (B) sont des produits nouveaux l'homme de l'art n'aura aucune

difficulté à en effectuer la synthèse en appliquant les procédés décrits dans les quatre documents cités ci-dessus.

De préférence les inhibiteurs sont choisis parmi les produits suivants :

| | |
|---|---|
| $HC \equiv C - \overset{O}{\overset{\|}{C}} - (CH_2)_4 - CH_3$ | octyne-1 one-3 |
| $HC \equiv C - \overset{O}{\overset{\|}{C}} - (CH_2)_4 - CH_2\ Cl$ | chlóro-8 octyne-1 one-3 |
| $CH_3 - \overset{OH}{\overset{\vert}{CH}} - C \equiv C - \overset{O}{\overset{\|}{C}} - CH_3$ | hydroxy-2 hexyne-3 one-5 |
| $HC \equiv C - \overset{O}{\overset{\|}{C}} - (CH_2)_4 - CH_2Br$ | bromo-8 octyne-1 one-3 |
| $HC \equiv C - \overset{O}{\overset{\|}{C}} - C(CH_3)_2 - (CH_2)_3 - CH_3$ | diméthyl-4,4 octyne-1 one-3 |
| $H - C \equiv C - \overset{O}{\overset{\|}{C}} - (CH_2)_3 - CH_2Cl$ | chloro-7 heptyne-1 one-3 |
| $Cl - CH_2 - (CH_2)_4 - \overset{O}{\overset{\|}{C}} - C \equiv C - (CH_2)_3 - CH_3$ | chloro-1 dodécyne-7 one-6 |
| $CH_3 - (CH_2)_5 - C \equiv C - \underset{O}{\underset{\|}{C}} - CH_3$ | acétyl-1 n-octyne-1 |
| 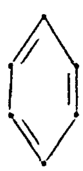 $- C \equiv C - \underset{O}{C} - CH_3$ | phényl-1 butyne-1 one-3 |
| $CH_3 - \overset{O}{\overset{\|}{C}} - C \equiv C - \overset{O}{\overset{\|}{C}} - CH_3$ | hexyne-3 dione-2,4 |
| $CH_3 - (CH_2)_2 - \overset{O}{\overset{\|}{C}} - C \equiv CH$ | hexyne-1 one-3 |

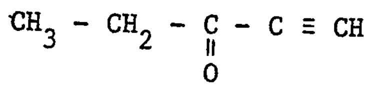

pentyne-1 one-3

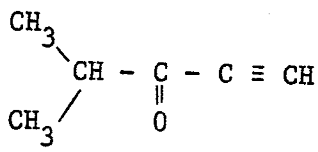

méthyl-4 pentyne-1 one-3

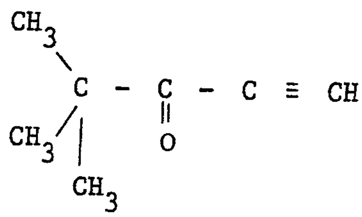

diméthyl-4,4 pentyne-1 one -3

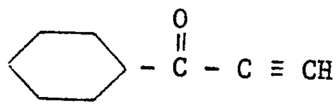

cyclohexyl-1 propyne-1 one-3

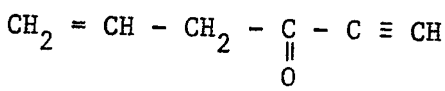

hexène-1 yne-5 one-4

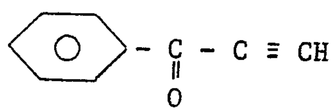

benzoyl-acétylène

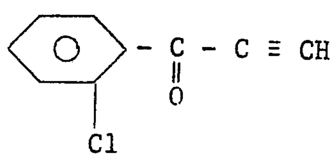

o-chlorobenzoylacétylène

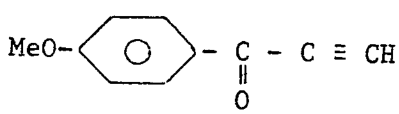

p-méthoxybenzoylacétylène

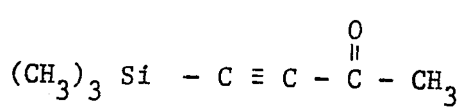

triméthylsilyl-1 butyne-1 one-3

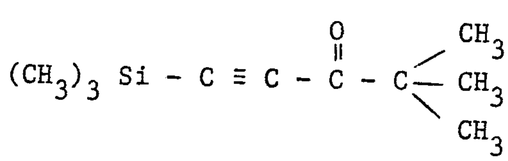

triméthylsilyl-1 diméthyl-4,4 pentyne-1 one-3

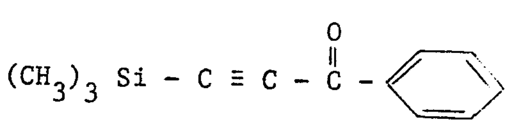

triméthylsilyl-1 benzoyl-2 acétylène

D'autres caractéristiques et avantages de la présente invention apparaîtront à la lecture des exemples suivants donnés à titre illustratif nullement limitatif.

EXEMPLE 1 -

Un bain de traitement est préparé selon le mode opératoire suivant :

A 100 parties d'une composition de silicone renfermant :

a) 90,5 % d'un copolymère de polydiméthylsiloxane ayant des motifs vinyle dans la chaîne et à terminaison diméthylvinylesiloxy ayant environ 3 % en poids de groupements vinyle et présentant une viscosité d'environ 250 m.Pa.s. à 25°C,

b) 2,5 % de tétraméthyl-1,3,5,7 tétravinyl-1,3,5,7 cyclotétrasiloxane

c) 7 % d'un fluide polyméthylhydrosiloxane à terminaison triméthylsiloxy utilisé comme agent de réticulation comprenant environ 1,5 % en poids d'atomes d'hydrogène liés au silicium, ayant une viscosité d'environ 20 mPa.s. à 25°C.

On ajoute à ce bain :

- 60 ppm de platine ($3.10^{-4}$ at.g. de Pt/kg de composition) sous la forme d'un complexe du platine préparé à partir de l'acide chloroplatinique et de divinyl-1,3 tétraméthyl-1,1,3,3 disiloxane, comme décrit dans le brevet US 3 814 730.

- 0,5 % en poids d'octyne-1 one-3, soit $4,1\ 10^{-2}$ mole/kg de composition.

On agite vigoureusement, à température ambiante, le mélange pendant quelques minutes et on dépose ensuite ce mélange (environ 1 $g/m^2$) sans utiliser de solvant sur du papier, au moyen d'une barre d'enduction et on fait durcir la composition silicone dans un four à circulation d'air forcé réglé à 110°C.

On a ainsi étudié le durcissement du revêtement de silicone en notant le temps de séjour minimum dans le four, nécessaire pour obtenir un revêtement bien durci. On mesure par ailleurs l'augmentation de viscosité de la composition en fonction du temps du bain catalysé pour juger de l'efficacité des cétones α-acétyléniques en tant qu'inhibiteur. Les résultats obtenus sont

rassemblés dans le tableau I ci-après.

EXEMPLES 2 A 10 -

On procède de la même façon que dans l'exemple 1 sauf que l'on choisit un autre inhibiteur ; les résultats sont rassemblés dans le tableau I ci-après :

TABLEAU I

| Nature de l'inhibiteur | concentration de l'inhibiteur dans la résine | | temps de durcissement 110°C (sec) | temps de gélification à 20°C en h et mn |
|---|---|---|---|---|
| | % en poids | mole/kg | | |
| néant | néant | néant | 10 | 30 mn |
| octyne-1 one-3 | 0,25 % | $2,1.10^{-2}$ | 10-12 | 7 h |
| " | 0,50 % | $4,1.10^{-2}$ | 10-12 | 14 h |
| " | 0,63 % | $5,0.10^{-2}$ | 12 | 25 h |
| chloro-8 octyne-1 one-3 | 0,22 | $1,4.10^{-2}$ | 15 | 4 h |
| " | 0,50 | $3,0.10^{-2}$ | 15 | 10 h |
| " | 0,68 | $4,1.10^{-2}$ | 15 | 19 h |
| " | 0,73 | $4,6.10^{-2}$ | 18 | 24 h |
| hydroxy-2 hexyne-3 one-4 | 0,50 | $4,5.10^{-2}$ | 15 | 60 h |
| triméthylsilyl-1 butyne-1 one-3 | 0,70 | $5,6.10^{-2}$ | 10 | 3 h |
| " | 1,37 | $9,8.10^{-2}$ | 15 | 18 h |
| acétyl-1 octyne-1 | 0,30 | $2,0.10^{-2}$ | 10 | 1 h |
| " | 1,50 | $9,8.10^{-2}$ | 10 | 3h30mn |
| phényl-1 butyne-1 one-3 | 0,30 | $2,0.10^{-2}$ | 15 | 1 h |
| " | 1,00 | $7,0.10^{-2}$ | 10 | 5 h |

| Nature de l'inhibiteur | concentration de l'inhibiteur dans la résine | | temps de durcissement 110°C (sec) | temps de gélification à 20°C en h et mn |
|---|---|---|---|---|
| | % en poids | mole/kg | | |
| triméthylsilyl-1 diméthyl-4,4 pentyne-1 one-3 | 0,92 | $5,1.10^{-2}$ | 10 | 4 h |
| " | 1,40 | $7,7.10^{-2}$ | 10 | 6h30mn |
| " | 2,50 | $14,0.10^{-2}$ | 15 | 21 h |
| triméthylsilyl-1 benzoyl-2 acétylène | 0,57 | $2,9.10^{-2}$ | 10 | 2h45mn |
| " | 1,51 | 7,5.10-2 | 15 | 9 h |
| " | 2,10 | $10,4.10^{-2}$ | 15 | 25 h |

EXEMPLE 11 -

On reprend la composition de silicone de l'exemple 1 et on ajoute 60 ppm de rhodium, sous la forme d'un complexe de l'acétylacétonate de bis-(éthylène)rhodium $(C_2H_4)_2$ Rh $(CH_3$ COCH $COCH_3)$
décrit dans le brevet US 3 928 629 et 0,4 % d'octyne-1 one-3.

- Temps de durcissement à 110°C : 20 secondes
- Temps de gélification à 20°C : 9 heures
- Temps de gélification à 20°C sans inhibiteur : 30 minutes

EXEMPLE 12 -

Dans cet exemple on utilise une composition identique à celle de l'exemple 1 sauf qu'elle comporte 0,6 % en poids d'inhibiteur chloro-8 octyne-1 one-3. Cette composition est appliquée à raison de 0,8 g/m$^2$, en une couche uniforme sur une face d'un papier

Kraft pesant 67 $g/m^2$ (préparé à partir d'une pâte raffinée à 70° Shopper), surfacé par une couche barrière en carboxyméthylcellulose et supercalandré. Le dépôt de la couche est effectué à l'aide d'une tête d'enduction du type Helio glissant, montée sur une machine industrielle d'enduction du papier. La couche déposée est durcie par passage du papier enduit à la vitesse de 180 m/minute, dans un four-tunnel de la machine porté à 110°C, le temps de passage du papier est de 15 secondes.

Sur la face du papier recouverte d'un fin revêtement de silicone durcie sont déposés, au moyen d'une couleuse, 60 $g/m^2$ d'une solution à 40 % dans l'acétate d'éthyle, d'un polymère acrylique adhésif commercialisé sous le nom de marque SOLURON A 1030 E. Le papier, recouvert de la solution d'adhésif, est placé pendant 3 minutes dans une étuve ventilée portée à 130°C puis abandonné 15 minutes à la température ambiante. Il reste sur le papier une couche de 24 $g/m^2$ d'adhésif.

Sur cette couche est appliqué un film en polytéréphtalate d'éthylène. Il est maintenu en place pendant 24 heures, sous une pression de 24 $g/cm^2$. Au bout de cette période, la force nécessaire pour décoller le film du papier est mesurée ; on exécute le décollement à l'aide d'un dynamomètre dont l'une des deux machoires, qui est fixe, retient le papier, et l'autre tue sur une extrémité du film, repliée de 180°, à la vitesse de 25 cm/minute. On trouve une force de décollement faible de 2,0 g pour une largeur du film de 1 cm.

En outre la viscosité du bain ayant servi à l'enduction varie de 300 mPa.s. à 400 mPa.s. en 7 heures. La gélification n'intervient que 24 heures après l'introduction dans la composition du catalyseur au Platine.

EXEMPLE 13 -

On utilise la même composition que celle utilisée à l'exemple 7 sauf que l'on utilise comme catalyseur le produit de réaction de l'acide chloroplatinique sur l'octanol conformément à l'enseignement du brevet US 3 220 972, la dose de platine étant toujours de 60 ppm de platine métal.

On refait exactement le même essai qu'à l'exemple 7 et l'on trouve également une force de décollement de 2 g pour une largeur du film de 1 cm.

En outre la viscosité du bain ayant servi à l'enduction varie de 280 mPa.s. à 450 mPa.s en 7 heures. La gélification n'intervient que 24 heures après l'introduction dans la composition du catalyseur au Platine.

EXEMPLES 14 A 20

A 100 g d'huile polydiméthysiloxane de viscosité 600 mPa.s. à 25° C à terminaison diméthylvinylsiloxy (0,4 % en poids de groupements vinyle) on ajoute 41,5 g de silice fumée de surface spécifique 300 m2/g traitée par l'hexaméthyldisilazane. On ajoute à cette empâtage une composition organosilicique contenant 4 g d'un copolymère polydiméthylsiloxanique ayant des motifs hydrogénométhyl-siloxy dans la chaîne (0,24 % en poids d'atomes d'hydrogène liés au silicium) et ayant environ 120 atomes de silicium par molécule et 4 g d'un polymère polydiméthylsiloxanique à terminaisons diméthyl-hydrogénosiloxyle de viscosité 30 mPa.s à 25°C.

On ajoute à cette composition un catalyseur au platine et un inhibiteur qui est la chloro-8-octyne-1 one-3.

Dans les exemples 14 à 16, le catalyseur utilisé est le même que celui utilisé à l'exemple 13. Dans les exemples 17 à 20, le catalyseur utilisé est le même que celui utilisé à l'exemple 1.

Le temps de réticulation est apprécié par toucher d'un film d'une épaisseur de 500 µm constitué de la composition et enduit sur un papier couché polyéthylène.

Les résultats sont rassemblés dans le tableau II ci-après.

TABLEAU II

| Exemples | Concentration en inhibiteur (%) | Concentration en platine | Temps de réticulation | | Stabilité du bain ("pot life") |
|---|---|---|---|---|---|
| | | | 120°C | 150°C | |
| 14 | 0,096 | 12 ppm | - | 1 mn | 16 jours |
| 15 | 0,066 | 12 ppm | - | 1 mn | 3 jours |
| 16 | 0,19 | 6 ppm | - | 1 mn 30 s | > 1 mois |
| 17 | 0,096 | 12 ppm | - | - | > 1 mois |
| 18 | 0,066 | 12 ppm | 1 mn 30 s | 1 mn | 21 h |
| 19 | 0,082 | 6 ppm | 1 mn 30 s | 1 mn | 1 mois |
| 20 | 0,053 | 6 ppm | 1 mn 30 s | 1 mn | 5 jours |

## REVENDICATIONS

1 - Composition organopolysiloxanique caractérisée en ce qu'elle comporte :

(1) au moins un organopolysiloxane comportant par molécule au moins un radical vinyle, les autres radicaux étant des radicaux organiques mono- ou divalents n'exerçant pas d'influence défavorable sur l'activité catalytique

(2) au moins un organohydropolysiloxane renfermant au moins 3 atomes d'hydrogène liés au silicium par molécule, les autres radicaux étant des radicaux organiques mono- ou divalents n'exerçant pas d'influence défavorable sur l'activité catalytique

(3) un catalyseur qui est un complexe d'un métal du groupe du platine en quantité suffisante pour faire réagir (1) et (2)

(4) au moins un inhibiteur choisi parmi un composé organique ayant un point d'ébullition d'au moins 25°C et au moins un groupement acétylénique présentant un groupement carbonyle en position α par rapport aux atomes de carbone à insaturation acétylénique, ledit composé (4) étant en quantité suffisante pour inhiber la formation d'un gel à température ambiante, mais en quantité insuffisante pour empêcher la réticulation à température plus élevée .

2 - Composition selon la revendication (1), caractérisée en ce que l'inhibiteur (4) répond à la formule générale (A) :

$$R-(CH_2)_n-\overset{O}{\overset{\|}{C}}-C\equiv C-R' \qquad (A)$$

dans laquelle :

n est un nombre entier compris entre 0 et 10, de préférence entre 1 et 5,

R est choisi parmi un radical alkyle linéaire ou ramifié ayant de 1 à 10 atomes de carbone, un radical alcényle ayant de 2 à 4 atomes de carbone, un radical phényle, un radical cycloalkyle ayant de 4 à 8 atomes de carbone, un radical organosilyle choisi parmi les radicaux trialkylsilyle,

trialkoxysilyle, la partie alkyle ayant de 1 à 4 atomes de carbone ou un atome d'halogène choisi parmi le chlore, le brome et l'iode,

R' est choisi parmi un radical alkyle ayant de 1 à 4 atomes de carbone, l'atome d'hydrogène, un radical α-hydroxyalkyle ayant de 1 à 4 atomes de carbone, un radical alkylcarbonyle dont la partie alkyle comporte de 1 à 6 atomes de carbone, un radical benzoyle, ou un radical benzoylalkyle dont la partie alkyle comporte de 1 à 6 atomes de carbone, un radical organosilyle choisi parmi les radicaux trialkylsilyle, trialkoxysilyle, la partie alkyle ayant de 1 à 4 atomes de carbone.

3 - Composition selon la revendication 1, caractérisée en ce que l'inhibiteur (4) répond à la formule générale (B) :

$$XCH_2 - (CH_2)_n - \overset{\overset{\displaystyle O}{\|}}{C} - C \equiv CH \qquad (B)$$

dans laquelle n représente un nombre entier compris entre 1 et 15, de préférence entre 3 et 10 et X représente un atome d'halogène choisi parmi l'atome de chlore, de brome et d'iode.

4 - Composition selon l'une quelconque des revendications précédentes caractérisée en ce qu'elle comporte :

(1) un organopolysiloxane présentant des unités structurelles moyennes de formule (I) :

$$(R)_e \ (R')_f \ SiO \ \frac{(4-e-f)}{2} \qquad (I)$$

dans laquelle :

chaque R représente un radical choisi parmi un radical hydrocarboné monovalent ayant de 1 à 12 atomes de carbone, un radical halogéné monovalent ayant de 1 à 12 atomes de carbone et contenant de 1 à 4 atomes de chlore et/ou de fluor hydrocarboné, un radical cyanoalkyle ayant de 3 à 4 atomes de carbone, un radical cycloalkyle ou halogénocycloalkyle ayant de 3 à 8 atomes de carbone et contenant de 1 à 4 atomes de chlore et/ou de fluor, un radical aryle, alkylaryle ou halogénoaryle ayant de 6 à 8 atomes de carbone et contenant de 1 à 4 atomes de chlore et/ou de fluor,

R' représente un radical alcényle choisi parmi un radical vinyle, allyle, méthallyle, buténуle, penténуle, un radical alkynyle choisi parmi un radical éthynyle, propynyle, butynyle, e et f ont la même signification que pour (II) ci-dessus.

(2) un organohydropolysiloxane présentant des unités structurelles moyennes de formule (II) :

$$(R)_e\,(H)_f\,SiO_{\frac{(4-e-f)}{2}} \qquad (II)$$

dans laquelle R a la même signification que ci-dessus et e a une valeur comprise entre 0,5 et 2,49 et f a une valeur comprise entre 0,001 et 1 inclus et la somme de e plus f est comprise entre 1,0 et 2,5 inclus.

5 - Composition selon l'une quelconque des revendications précédentes, caractérisée en ce que l'organopolysiloxane 1 est un copolymère de formule (III) :

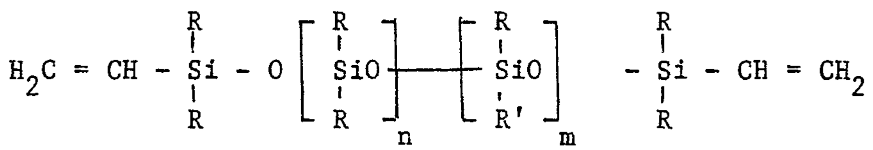 (III)

dans laquelle R est un méthyle et R' est un vinyle, la viscosité étant comprise entre 40 et 100 000 mPa.s. à 25°C et n et m sont des nombres entiers choisis de telle sorte que la teneur pondérale en groupe vinyle ne dépasse pas 10 % en poids, m pouvant être égal à 0.

6 - Composition selon l'une quelconque des revendications précédentes caractérisé en ce que l'organohydropolysiloxane répond à la formule (IV) suivante :

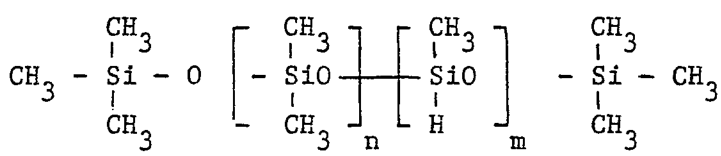 (IV)

la viscosité du polymère pouvant être comprise entre 40 et 100 000 mPa.s. et n et m sont des nombres entiers choisis pour que la teneur en atomes d'hydrogène liés au silicium ne dépasse pas 1,65 % en poids et soit comprise de préférence entre 0,1 et 1,6 % en poids, n pouvant être égal à 0.

7 - Composition selon l'une quelconque des revendications précédentes, caractérisée en ce qu'elle contient en outre pour 100 parties en poids de composés (1) et (2) de 1 à 20 parties en poids d'un polysiloxane linéaire contenant deux atomes d'hydrogène liés au silicium par molécule, aucun atome de silicium n'ayant plus d'un atome d'hydrogène lié à lui et les 2 atomes d'hydrogène étant de

préférence fixés sur les atomes de silicium terminaux du siloxane, les radicaux organiques de cet organosiloxane étant choisis parmi les radicaux méthyle, éthyle, phényle et trifluoro-3,3,3 propyle.

8 - Composition selon l'une quelconque des revendications précédentes, caractérisée en ce que le métal du catalyseur est choisi parmi le platine et le rhodium.

9 - Compositions selon l'une quelconque des revendications précédentes dont le mélange des constituants et la réticulation à une température supérieure à 80° C conduit à des compositions réticulées sous forme de résines, d'élastomères de gels ou de mousses.

10 - Composition selon l'une quelconque des revendications précédentes, caractérisée en ce qu'elle est dispersée dans un solvant organique volatile compatible avec ladite composition et en ce que le rapport des atomes d'hydrogène liés au silicium dans l'organohydropolysiloxane (2) à la somme des radicaux vinyle, alcényle et alkynyle liés au silicium dans l'organopolysiloxane (1) est d'au moins 0,5 et inférieur à 2:1.

11 - Composition de revêtement sans solvant selon l'une quelconque des revendications 1 à 8, caractérisé en ce qu'elle présente une viscosité ne dépassant pas 5 000 mPa.s. à 25°C et en ce que le rapport des atomes d'hydrogène liés au silicium dans l'organohydropolysiloxane (2) à la somme des radicaux vinyle, alcényle et alkynyle liés au silicium dans l'organopolysiloxane (1) est d'au moins 0,5 : 1 et inférieur à 2 : 1.

12 - Procédé permettant de rendre des feuilles de matériau souples non adhérentes à des surfaces auxquelles elles adhèrent normalement , caractérisé en ce qu'il consiste à appliquer une quantité de composition telle que définie à la revendication 10 ou 11, entre 0,1 et 5 g par $m^2$ de surface à enduire puis à réticuler la composition.

13 - Matériaux enduit d'une composition telle que définie à l'une quelconque des revendications 1 à 11.

0146422

Numéro de la demande

Office européen des brevets

# RAPPORT DE RECHERCHE EUROPEENNE

EP 84 40 2054

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 091 291 (TORAY) * Revendication 1; pages 8,9; page 10, § 3 * | 1 | C 08 L 83/04 // C 08 K 5/07 (C 08 L 83/04 C 08 L 83:07 ) |
| A | FR-A-2 433 030 (GENERAL ELECTRIC) * Revendications 1,12,23,34 * | 1 | |
| A,D | US-A-3 445 420 (G.J. KOOKOOTSEDES) * Revendication 1 * | 1 | |
| A,D | FR-A-1 324 312 (RHONE-POULENC) * Résumé, point 1 * | 1 | |
| | | | **DOMAINES TECHNIQUES RECHERCHES (Int. Cl.4)** |
| | | | C 08 L 83 C 08 K 5 |

Le présent rapport de recherche a été établi pour toutes les revendications

| Lieu de la recherche | Date d'achèvement de la recherche | Examinateur |
|---|---|---|
| LA HAYE | 07-03-1985 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503. 03.82